# FASCICULE DE BREVET EUROPEEN

(11) **EP 1 220 387 B1**
(45) Date de publication et mention de la délivrance du brevet: **09.06.2004**
(21) Numéro de dépôt: 01403064.7
(22) Date de dépôt: 29.11.2001
(51) Int. Cl.: H01S 3/0941, H01S 3/06

(54) **Procédé pour fabriquer des éléments actifs pour source laser**
Herstellungsverfahren von aktiven Elementen für Laserquellen
Fabrication process of actif elements for laser sources

(30) Priorité: 26.12.2000 FR 0017021
(43) Date de publication de la demande: 03.07.2002
(73) Titulaire: COMPAGNIE INDUSTRIELLE DES LASERS CILAS, F-91460 Marcoussis (FR)
(72) Inventeur: Montagne, Jean-Eucher, 45000 Orleans (FR)
(74) Mandataire: Hauer, Bernard

(56) Documents cités:
- EP-A- 0 404 635
- EP-A- 1 115 186
- PATENT ABSTRACTS OF JAPAN vol. 017, no. 378 (E-1398), 15 juillet 1993 (1993-07-15) & JP 05 063263 A (HOYA CORP), 12 mars 1993 (1993-03-12)
- PATENT ABSTRACTS OF JAPAN vol. 1996, no. 04, 30 avril 1996 (1996-04-30) & JP 07 321394 A (NEC CORP), 8 décembre 1995 (1995-12-08)

## Description

La présente invention concerne un procédé pour fabriquer des éléments actifs pour source laser.

On sait qu'une source laser comporte, de façon générale, au moins :
- un élément actif au moins en partie dopé, dans lequel est engendré un phénomène d'amplification (laser) stimulé ;
- un système de pompage engendrant un faisceau de pompage qui est émis dans ledit élément actif de manière à apporter l'énergie nécessaire à ladite amplification laser ; et
- une cavité optique qui confère au faisceau laser obtenu par cette amplification ses caractéristiques de directivité et de géométrie.

La présente invention concerne plus particulièrement la fabrication d'éléments actifs comportant au moins une partie dopée comprenant un dopage absorbant susceptible d'absorber un faisceau de pompage pour amplifier un rayonnement laser et au moins une partie non dopée, ne comprenant pas un tel dopage absorbant.

Dans le cadre de la présente invention, on entend par partie ou bloc "non dopé", une partie ou un bloc ne comprenant pas ledit dopage absorbant, c'est-à-dire une partie ou un bloc non absorbant de la pompe (faisceau de pompage). Cette partie et ce bloc peuvent toutefois comporter un dopage particulier destiné à un autre but que l'absorption de la pompe.

Pour fabriquer un tel élément actif, on réalise généralement les opérations successives suivantes :
a) on découpe et on polit l'élément formant la partie non dopée ;
b) on découpe et on polit l'élément formant la partie dopée ;
c) on solidarise ces deux éléments de manière à former un élément actif ; et
d) on traite les surfaces de cet élément actif.

Bien entendu, lorsque l'on souhaite fabriquer une pluralité de tels éléments actifs, il est nécessaire de réaliser la suite d'opérations a) à d) précitées, individuellement, pour chacun de ces éléments actifs.

Par conséquent, la fabrication d'une pluralité d'éléments actifs identiques est longue et coûteuse.

La présente invention a pour objet de remédier à ces inconvénients. Elle concerne un procédé pour fabriquer, de façon rapide, efficace et à coût réduit, des éléments actifs pour source laser.

Selon l'invention, ledit procédé pour fabriquer des éléments actifs pour source laser, chacun desdits éléments actifs comportant au moins une partie dopée comprenant un dopage absorbant susceptible d'absorber un faisceau de pompage pour amplifier un rayonnement laser et au moins une partie non dopée, ne comprenant pas un tel dopage absorbant, chacun desdits éléments actifs présentant une première face et une seconde face opposées qui présentent chacune la même forme géométrique et qui sont séparées l'une de l'autre d'une distance prédéfinie, est remarquable en ce que l'on réalise de façon successive :
A) un processus de préparation d'un barreau actif allongé, qui présente une section transversale identique à ladite forme géométrique et une longueur supérieure au moins au double de ladite distance prédéfinie entre les première et seconde faces d'un élément actif, ledit processus de préparation comprenant au moins une étape de découpage et une étape de solidarisation d'au moins un bloc allongé dopé comprenant ledit dopage absorbant et d'au moins un bloc allongé non dopé, ne comprenant pas ledit dopage absorbant ; et
B) un processus de formation d'une pluralité d'éléments actifs à partir dudit barreau actif, ledit processus de formation comprenant au moins une étape de coupes transversales le long dudit barreau actif et une étape de traitement collectif de surfaces desdits éléments actifs.

Ainsi, grâce à l'invention, pour la fabrication des éléments actifs, on prévoit la réalisation d'un produit semi-fini (le barreau actif), ce qui permet d'effectuer collectivement, c'est-à-dire pour l'ensemble des éléments actifs à fabriquer, au moins :
- la solidarisation [des blocs dopé(s) et non dopé(s)], lors du processus de préparation du barreau ; et
- le traitement de surfaces, lors du processus de formation des éléments actifs.

Par conséquent, les éléments actifs peuvent être fabriqués rapidement et à coût réduit, puisque, au lieu d'effectuer pour chacune des étapes de solidarisation et de traitement des surfaces une pluralité d'opérations individuelles, on effectue uniquement et simplement une seule opération collective.

Dans un premier mode de réalisation, lors dudit processus de formation, on réalise de façon successive :
a) ladite étape de traitement collectif de surfaces, consistant à traiter les surfaces dudit barreau actif ; et
b) ladite étape de coupes transversales, consistant à couper ledit barreau actif ainsi traité de manière à former une pluralité d'éléments actifs comprenant lesdites première et seconde faces séparées l'une de l'autre de ladite distance prédéfinie.

En outre, dans un second mode de réalisation, lors dudit processus de formation, on réalise de façon successive :
a) ladite étape de coupes transversales, consistant à couper ledit barreau actif de manière à former une pluralité d'éléments actifs comprenant lesdites première et seconde faces séparées l'une de l'autre de ladite distance prédéfinie ; et
b) ladite étape de traitement collectif de surfaces, selon laquelle on rassemble par simple mise en contact des première et seconde faces au moins certains des éléments actifs ainsi formés de manière à obtenir un barreau actif au moins partiellement reconstitué et on traite les surfaces de ce dernier, c'est-à-dire on traite collectivement les surfaces desdits éléments actifs rassemblés.

De préférence, lors dudit processus de formation, on réalise, après l'étape de coupes transversales, un polissage des faces coupées correspondant auxdites première et seconde faces des éléments actifs. Toutefois, si l'étape de coupes est suffisamment précise, les faces coupées peuvent éventuellement ne pas être polies.

De plus, à ladite étape de coupes :
- dans une première variante, on réalise des coupes transversales successives au moyen d'une même scie diamantée ; et
- dans une seconde variante, on réalise simultanément une pluralité de coupes transversales au moyen d'une scie comportant un peigne de rubans parallèles, ce qui permet de réduire la durée des coupes et donc la durée de mise en oeuvre du procédé de fabrication conforme à l'invention.

Par ailleurs, lors dudit processus de préparation du barreau actif, dans une première variante, on réalise de façon successive :
a) ladite étape de découpage, consistant à découper lesdits blocs allongés [dopé(s) et non dopé(s)] selon des dimensions telles que, lorsqu'ils sont rendus solidaires l'un de l'autre, ils forment ledit barreau actif présentant une section transversale identique à ladite forme géométrique et une longueur supérieure au moins au double de ladite distance prédéfinie entre les première et seconde faces d'un élément actif ; et
b) ladite étape de solidarisation desdits blocs allongés de manière à former ledit barreau actif.

En outre, dans une seconde variante, on réalise de façon successive :
a) ladite étape de solidarisation desdits blocs allongés de manière à former un ensemble actif ; et
b) ladite étape de découpage, consistant à découper ledit ensemble actif de manière à obtenir ledit barreau actif présentant les dimensions souhaitées, c'est-à-dire une section transversale identique à ladite forme géométrique et une longueur supérieure au moins au double de ladite distance prédéfinie entre les première et seconde faces d'un élément actif.

Par ailleurs, selon l'invention, lors dudit processus de préparation, soit avant, soit après la formation du barreau actif, on réalise le polissage des faces desdits blocs allongés, qui sont visibles lorsque lesdits blocs allongés sont dans une position correspondant à la position de solidarisation.

Bien que, dans le cadre de la présente invention, les blocs puissent être rendus solidaires l'un de l'autre au moyen de différentes techniques connues, telles que le collage par exemple, on réalise de préférence cette solidarisation au moyen d'un soudage de type usuel.

Dans un mode de réalisation particulier, on forme ledit barreau actif à partir d'un bloc allongé dopé et de deux blocs allongés, non dopés. Dans ce cas, de préférence, ledit bloc allongé dopé présente la forme d'une plaque et lesdits deux blocs allongés, non dopés, sont identiques et sont fixés de part et d'autre de ladite plaque.

Les figures du dessin annexé feront bien comprendre comment l'invention peut être réalisée. Sur ces figures, des références identiques désignent des éléments semblables.
Les figures 1 et 2 illustrent les étapes successives respectivement de deux variantes du procédé conforme à l'invention.
La figure 3 montre, en perspective, un élément actif susceptible d'être fabriqué par le procédé conforme à l'invention.
La figure 4 montre plusieurs blocs allongés, destinés à être rendus solidaires les uns des autres pour former un barreau actif.
La figure 5 illustre un barreau actif obtenu à partir des blocs allongés montrés sur la figure 4 et destiné à la réalisation d'une pluralité d'éléments actifs tels que celui montré sur la figure 3.

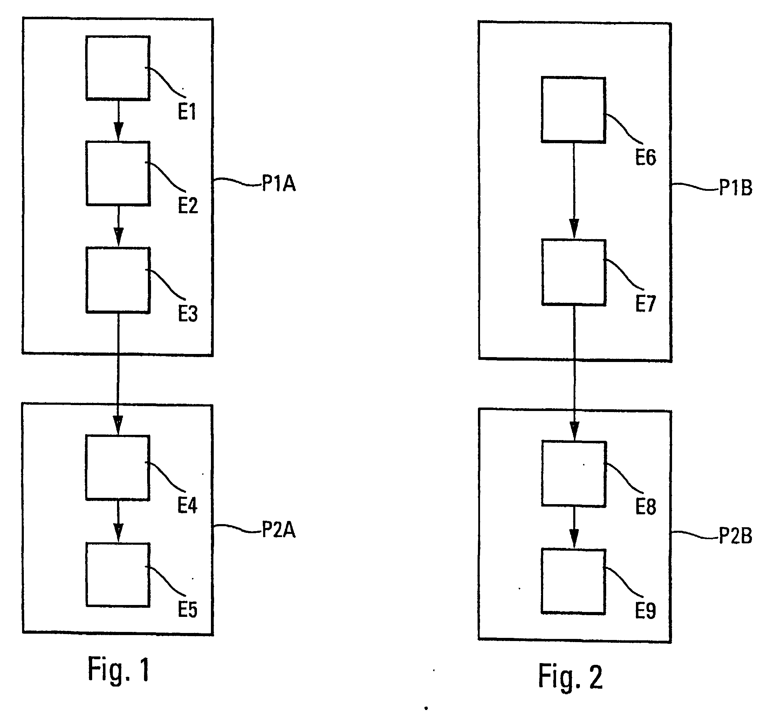

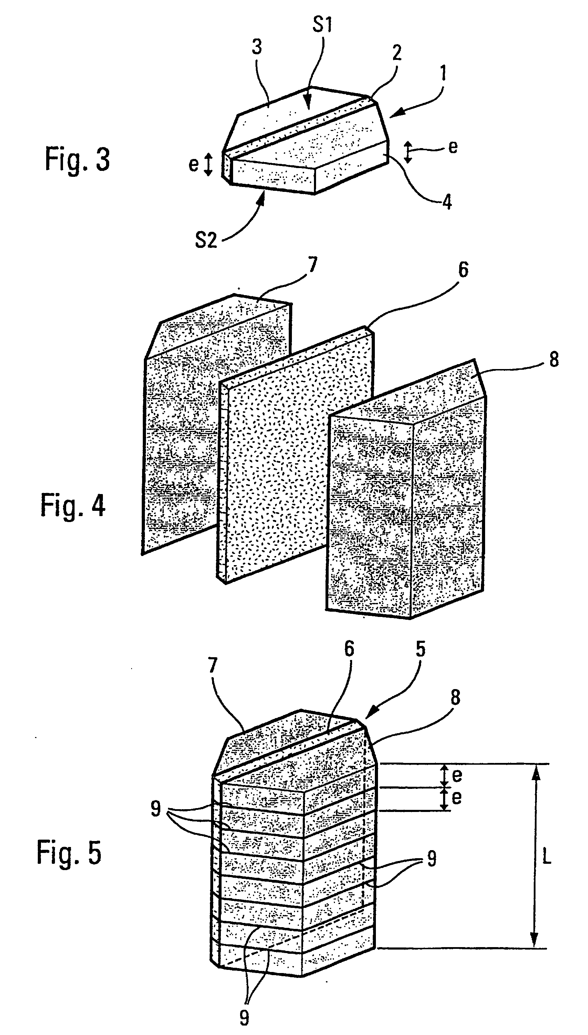

Le procédé conforme à l'invention et illustré schématiquement selon deux modes de réalisation différents sur les figures 1 et 2, est destiné à fabriquer des éléments actifs pour source laser, par exemple des éléments tels que l'élément actif 1 représenté à titre d'illustration sur la figure 3.

Un tel élément actif 1 qui, de façon connue, peut être associé à un système de pompage et à une cavité optique non représentés pour former une source laser, comporte au moins une partie dopée 2 comprenant un dopage absorbant usuel, susceptible d'absorber un faisceau de pompage pour amplifier un rayonnement laser, et au moins une partie non dopée 3, 4 ne comprenant pas un tel dopage absorbant, partie non dopée 3, 4 qui est généralement destinée à la transmission du faisceau de pompage vers la partie dopée 2. L'exemple d'élément actif 1 représenté sur la figure 3 comprend deux parties 3 et 4 non dopées, qui sont identiques et qui sont agencées de part et d'autre de ladite partie dopée 2.

Ledit procédé de fabrication, permettant de fabriquer une pluralité d'éléments actifs 1 identiques, est remarquable selon l'invention en ce que l'on réalise de façon successive :
A) un processus P1A ou P1B de préparation d'un barreau actif allongé 5 qui est représenté sur la figure 5 et qui présente :
   - une section transversale qui est identique à la forme géométrique des surfaces S1 et S2 opposées et identiques (surfaces supérieure et inférieure) des éléments actifs 1 à fabriquer (figure 3) ; et
   - une longueur L qui est supérieure à au moins deux fois l'épaisseur e (c'est-à-dire la distance entre les surfaces S1 et S2 parallèles) des éléments actifs 1 à fabriquer. De préférence, la longueur L est dix à vingt fois supérieures à l'épaisseur e. Ledit processus de préparation P1 A, P1B comprend, comme précisé ci-après, au moins une étape de découpage et une étape de solidarisation d'au moins un bloc allongé dopé 6 comprenant ledit dopage absorbant et d'au moins un bloc allongé non dopé 7, 8 ne comprenant pas ledit dopage absorbant ; et
B) un processus de formation P2A, P2B d'une pluralité d'éléments actifs 1 à partir dudit barreau actif 5, ledit processus de formation comprenant, comme précisé ci-dessous, au moins une étape de coupes transversales le long dudit barreau actif 5 et une étape de traitement collectif de surfaces desdits éléments actifs 1.

On notera que le traitement de surfaces consiste, de façon usuelle, à réaliser notamment des dépôts (par exemple métalliques ou multi-diélectriques) en fonction des caractéristiques optiques que l'on souhaite obtenir.

Ainsi, grâce à l'invention, pour la fabrication des éléments actifs 1, on prévoit la réalisation d'un produit semi-fini (le barreau actif 5), ce qui permet d'effectuer collectivement, c'est-à-dire pour l'ensemble des éléments actifs à fabriquer, au moins :
- la solidarisation (des blocs allongés), lors du processus de préparation P1A, P1B du barreau 5 ; et
- le traitement des surfaces, lors du processus de formation P2A, P2B des éléments actifs 1.

Par conséquent, les éléments actifs 1 peuvent être fabriqués rapidement et à coût réduit, puisque, au lieu d'effectuer pour chacune des étapes de solidarisation et de traitement des surfaces une pluralité d'opérations individuelles, on effectue uniquement et simplement une seule opération collective.

On notera que le procédé conforme à l'invention n'est pas limité par la forme géométrique des surfaces S1 et S2, toute forme géométrique étant envisageable, ni par les nombres de partie(s) dopée(s) et de partie(s) non dopée(s) des éléments actifs 1.

Dans un premier mode de réalisation P1A illustré sur la figure 1, le processus de préparation du barreau actif 5 comprend les étapes successives suivantes :
a) une étape E1 de découpage et de polissage du bloc dopé 6 ;
b) une étape E2 de découpage et de polissage des blocs non dopés 7 et 8 ; et
c) une étape E3 de solidarisation de ces différents blocs 6, 7 et 8.

Sur la figure 4, on a représenté les blocs 6, 7 et 8 découpés et polis, avant l'étape E3 de solidarisation. Ces blocs 6, 7 et 8 sont découpés selon l'invention, de manière à présenter des dimensions telles que, lorsque ces blocs 6, 7 et 8 sont rendus solidaires les uns des autres comme représenté sur la figure 5, ils forment directement un barreau actif 5 présentant les dimensions souhaitées, c'est-à-dire que ledit barreau actif 5 présente une section transversale qui est identique à la forme souhaitée des surfaces S1 et S2 des éléments actifs 1. Dans l'exemple de réalisation de la figure 3, cette forme est octogonale.

Par ailleurs, dans un second mode de réalisation P1B illustré sur la figure 2, le processus de préparation du barreau actif 5 comprend la succession d'étapes suivante :
a) une étape E6 de solidarisation des blocs allongés 6, 7 et 8 (qui ne présentent pas encore les dimensions adéquates) de manière à former un ensemble actif non représenté ; et
b) une étape E7 de découpage et de polissage dudit ensemble actif de manière à former un barreau actif 5 présentant les dimensions souhaitées.

Dans le cadre de la présente invention, on peut réaliser les étapes de solidarisation E3 et E6 à l'aide de tout procédé de solidarisation connu, et en particulier par collage.

De préférence, toutefois, les blocs 6, 7 et 8 sont assemblés ensemble au moyen d'un procédé de soudage.

Un procédé de soudage particulier pour assembler les blocs 6, 7 et 8 peut être tel que l'on doive réaliser la suite d'opérations successives suivantes :
a) on polit les surfaces à souder de ces blocs 6, 7 et 8 ;
b) on nettoie très soigneusement, en particulier chimiquement, ces surfaces ;
c) on met en contact les blocs 6, 7 et 8, leur grande planéité entraînant leur adhésion moléculaire ;
d) on chauffe l'ensemble ainsi constitué jusqu'à des températures proches du point de fusion des matériaux constituant lesdits blocs 6, 7 et 8 ; et
e) on refroidit lentement le barreau actif 5 ainsi formé, pour éviter que des gradients thermiques n'induisent des contraintes résiduelles.

Pour pouvoir bien mettre en oeuvre ce procédé de soudage, il est préférable que les matériaux des différents blocs 6, 7 et 8 présentent des coefficients de dilatation thermique et des points de fusion qui sont très proches. De plus, ces matériaux doivent être compatibles chimiquement.

Toutefois, lorsque les différents matériaux présentent des caractéristiques thermiques et chimiques incompatibles, on peut effectuer un apport de matériau à l'interface afin d'adapter les coefficients de dilatation. Le matériau apporté devra, dans ce cas, présenter une souplesse suffisante pour absorber les différences de dilatation des différents types de matériaux des blocs 6, 7 et 8 à souder.

Il est également envisageable de doper le matériau des blocs 7 et 8 (non dopés par ledit dopage absorbant) de manière à le rendre compatible au matériau du bloc 6 (dopé par ledit dopage absorbant) sans pour autant rendre ledit matériau des blocs 7 et 8 absorbant pour le faisceau de pompage.

Par ailleurs, ledit processus de formation des éléments actifs 1 à partir d'un barreau actif 5 peut présenter, dans un premier mode de réalisation P2A illustré sur la figure 1, successivement les étapes suivantes :
a) une étape E4 de traitement collectif de surfaces, consistant à traiter les différentes surfaces dudit barreau actif 5 ; et
b) une étape E5 de coupes transversales, consistant à couper transversalement ledit barreau actif 5 de longueur L selon des lignes de coupe 9 parallèles et espacées les unes des autres de ladite distance e, comme représenté sur la figure 5, de manière à former une pluralité d'éléments actifs 1 identiques d'épaisseur e.

Pour le traitement de surfaces, le barreau actif 5 est, par exemple, disposé dans une cloche de traitement usuelle, qui comprend notamment des moyens pour tenir ledit barreau 5 et des moyens pour masquer toutes les faces du barreau 5, à l'exception de la ou des faces que l'on souhaite traiter. Le barreau 5 est ainsi mis plusieurs fois dans la cloche, en démasquant successivement les faces à traiter. A cet effet, on réalise le traitement, de préférence, tout d'abord des faces qui sont faciles à revêtir (notamment les faces recevant un revêtement antireflet) et en dernier des faces dont le traitement est plus fragile (dichroïque).

Par ailleurs, dans un second mode de réalisation préféré P2B illustré sur la figure 2, ledit processus de formation des éléments actifs 1 à partir du barreau actif 5, présente les étapes successives suivantes :
a) une étape E8 de coupes transversales, consistant à couper le barreau actif 5 selon les lignes de coupe 9 représentées sur la figure 5 pour former une pluralité d'éléments actifs 1 identiques ; et
b) une étape E9 de traitement collectif de surfaces, selon laquelle on rassemble par simple mise en contact des première et seconde faces au moins certains des éléments actifs 1 ainsi formés de manière à obtenir un barreau actif au moins partiellement reconstitué et on traite les surfaces de ce dernier.

Ce second mode de réalisation P2B, pour lequel les traitements de surfaces sont réalisés après les coupes, permet d'assurer une bonne tenue du flux laser des traitements.

A l'étape E9, on empile, de préférence, les éléments actifs 1 les uns sur les autres, face de coupe contre face de coupe. Cet assemblage temporaire est disposé dans une cloche de traitement usuelle et le traitement est réalisé comme précisé ci-dessus pour l'étape E4.

On notera que les faces de coupe peuvent être dispensées de traitement dans la mesure où la tenue de l'élément actif 1 peut être réalisée sur ces faces au travers de matériaux bas indice (tels que des polymères par exemple).

En outre, concernant les étapes de coupes E5 et E8, le barreau actif 5 peut être coupé au moyen de coupes ou de tranchages successifs, par exemple à l'aide d'une scie diamantée usuelle, avec apport de liquide de refroidissement pour éviter un échauffement du matériau coupé. Toutefois, pour réduire la durée de coupe, cette dernière peut également être réalisée au moyen d'une scie usuelle comportant un peigne de rubans parallèles.

Les coupes transversales qui sont transversales par rapport à l'axe longitudinal du barreau actif 5 sont de préférence, mais non exclusivement, orthogonales par rapport audit axe longitudinal.

Si la coupe est suffisamment précise, on peut éventuellement se passer du polissage des surfaces coupées.

En revanche, si on réalise un polissage après les traitements de surfaces, il convient bien entendu de prendre toutes les précautions nécessaires pour ne pas endommager ces surfaces.

Bien que seules deux combinaisons (P1A-P2A ; P1 P1B-P2B) soient représentées sur les figures 1 et 2, toutes les combinaisons possibles (P1A-P2A ; P1A-P2B ; P1B-P2A ; P1B-P2B) du processus de préparation P1A, P1B et du processus de formation P2A, P2B sont envisageables dans le cadre de la présente invention.

## Revendications

1. Procédé pour fabriquer des éléments actifs (1) pour source laser, chacun desdits éléments actifs (1) comportant au moins une partie dopée (2) comprenant un dopage absorbant susceptible d'absorber un faisceau de pompage pour amplifier un rayonnement laser et au moins une partie non dopée (3, 4), ne comprenant pas un tel dopage absorbant, chacun desdits éléments actifs (1) présentant une première face (S1) et une seconde face (S2) opposées qui présentent chacune la même forme géométrique et qui sont séparées l'une de l'autre d'une distance (e) prédéfinie,
**caractérisé en ce que** l'on réalise de façon successive :
A) un processus de préparation (P1A, P1B) d'un barreau actif (5) allongé, qui présente une section transversale identique à ladite forme géométrique et une longueur (L) supérieure au moins au double de ladite distance prédéfinie (e) entre les première et seconde faces (S1, S2) d'un élément actif (1), ledit processus de préparation (P1A, A, P1 B) comprenant au moins une étape de découpage (E1, E2, E7) et une étape de solidarisation (E3, E6) d'au moins un bloc allongé dopé (6) comprenant ledit dopage absorbant et d'au moins un bloc allongé non dopé (7, 8) ne comprenant pas ledit dopage absorbant ; et
B) un processus de formation (P2A, P2B) d'une pluralité d'éléments actifs (1) à partir dudit barreau actif (5), ledit processus de formation comprenant au moins une étape de coupes transversales (E5, E8) le long dudit barreau actif (5) et une étape de traitement collectif (E4, E9) de surfaces desdits éléments actifs (1).

2. Procédé selon la revendication 1,
**caractérisé en ce que**, lors dudit processus de formation (P2A), on réalise de façon successive :
a) ladite étape de traitement collectif (E4) de surfaces, consistant à traiter les surfaces dudit barreau actif (5) ; et
b) ladite étape de coupes transversales (E5) consistant à couper ledit barreau actif (5) ainsi traité de manière à former une pluralité d'éléments actifs (1) comprenant lesdites première et seconde faces (S1, S2) séparées l'une de l'autre de ladite distance prédéfinie (e).

3. Procédé selon la revendication 1,
**caractérisé en ce que**, lors dudit processus de formation (P2B), on réalise de façon successive :
a) ladite étape de coupes transversales (E8) consistant à couper ledit barreau actif (5) de manière à former une pluralité d'éléments actifs (1) comprenant lesdites première et seconde faces (S1, S2) séparées l'une de l'autre de ladite distance prédéfinie (e) ; et
b) ladite étape de traitement collectif (E9) de surfaces, selon laquelle on rassemble par simple mise en contact des première et seconde faces (S1, S2) au moins certains des éléments actifs (1) ainsi formés de manière à obtenir un barreau actif au moins partiellement reconstitué et on traite les surfaces de ce dernier.

4. Procédé selon l'une quelconque des revendications 1 à 3,
**caractérisé en ce que**, lors dudit processus de formation (P2A, P2B), on réalise, après l'étape de coupes transversales (E5, E8), un polissage des faces coupées correspondant auxdites première et seconde faces (S1, S2) des éléments actifs (1).

5. Procédé selon l'une quelconque des revendications 1 à 4,
**caractérisé en ce qu'**à l'étape de coupes transversales (E5, E8), on réalise des coupes successives au moyen d'une scie diamantée.

6. Procédé selon l'une quelconque des revendications 1 à 4,
**caractérisé en ce qu'**à l'étape de coupes transversales (E5, E8), on réalise simultanément une pluralité de coupes au moyen d'une scie comportant un peigne de rubans parallèles.

7. Procédé selon l'une quelconque des revendications 1 à 6,
**caractérisé en ce que**, lors dudit processus de préparation (P1A) du barreau actif (5), on réalise de façon successive :
a) ladite étape de découpage (E1, E2), consistant à découper lesdits blocs allongés (6, 7, 8) selon des dimensions telles que, lorsqu'ils sont rendus solidaires l'un de l'autre, ils forment ledit barreau actif (5) présentant une section transversale identique à ladite forme géométrique et une longueur (L) supérieure au moins au double de ladite distance prédéfinie (e) entre les première et seconde faces (S1, S2) d'un élément actif (1) ; et
b) ladite étape de solidarisation (E3) consistant à rendre solidaires lesdits blocs allongés (6, 7, 8) de manière à former ledit barreau actif (5).

8. Procédé selon l'une quelconque des revendications 1 à 6,
**caractérisé en ce que**, lors dudit processus de préparation (P1B) du barreau actif (5), on réalise de façon successive :
a) ladite étape de solidarisation (E6) consistant à rendre solidaires lesdits blocs allongés (6, 7, 8) de manière à former un ensemble actif ; et
b) ladite étape de découpage (E7) consistant à découper ledit ensemble actif de manière à obtenir ledit barreau actif (5) présentant une section transversale identique à ladite forme géométrique et une longueur (L) supérieure au moins au double de ladite distance prédéfinie (e) entre les première et seconde faces (S1, S2) d'un élément actif (1 ).

9. Procédé selon l'une quelconque des revendications précédentes,
**caractérisé en ce que**, lors dudit processus de préparation (P1A, P1B) du barreau actif (5), on réalise le polissage des faces desdits blocs allongés (6, 7, 8), qui sont visibles lorsque lesdits blocs allongés (6, 7, 8) sont dans une position correspondant à la position de solidarisation.

10. Procédé selon l'une quelconque des revendications précédentes,
**caractérisé en ce que**, lors de ladite étape de solidarisation (E3, E6), on rend lesdits blocs allongés (6, 7, 8) solidaires l'un de l'autre au moyen d'un soudage.

11. Procédé selon l'une quelconque des revendications précédentes,
**caractérisé en ce que** l'on forme ledit barreau actif (5) à partir d'un bloc allongé (6) dopé et de deux blocs allongés (7, 8), non dopés.

12. Procédé selon la revendication 11,
**caractérisé en ce que** ledit bloc allongé (6) dopé présente la forme d'une plaque et **en ce que** lesdits deux blocs allongés (7, 8), non dopés, sont identiques et sont fixés de part et d'autre de ladite plaque (6).

## Patentansprüche

1. Verfahren zur Herstellung von aktiven Elementen (1) für Laserquellen, wobei jedes der aktiven Elemente umfasst: mindestens einen dotierten Teil (2), der eine absorbierende Dotierung aufweist, die in der Lage ist, ein Pumpbündel zu absorbieren, um eine Laserstrahlung zu verstärken, und mindestens einen nicht dotierten Teil (3, 4), der keine derartige absorbierende Dotierung aufweist, und wobei jedes der aktiven Elemente (1) eine erste Seite (S1) und eine zweite Seite (S2) aufweist, die einander gegenüberliegen, jeweils die gleiche geometrische Form aufweisen und um eine vordefinierte Entfernung (e) voneinander beabstandet sind, **dadurch gekennzeichnet, dass** nacheinander ausgeführt wird:
A) ein Prozess der Vorbereitung (P1A, P1B) eines länglichen aktiven Stabs (5) mit einem Querschnitt, der identisch ist mit der genannten geometrischen Form, und mit einer Länge (L), die größer ist als mindestens das Doppelte der vordefinierten Entfernung (e) zwischen der ersten und der zweiten Seite (S1, S2) eines aktiven Elements (1), wobei dieser Vorbereitungsprozess (P1A, P1B) umfasst: mindestens einen Ausschneideschritt (E1, E2, E7) und einen Schritt des Verbindens (E3, E6) von mindestens einem dotierten länglichen Block (6), der die absorbierende Dotierung aufweist, und mindestens einem nicht dotierten länglichen Block (7, 8), der die absorbierende Dotierung nicht aufweist; und
B) ein Prozess der Bildung (P2A, P2B) einer Vielzahl von aktiven Elementen (1) ausgehend von dem aktiven Stab (5), wobei der Bildungsprozess umfasst: mindestens einen Schritt von transversalen Schnitten (E5, E8) entlang des aktiven Stabs (5) und einen Schritt der kollektiven Oberflächenbehandlung (E4, E9) der aktiven Elemente (1).

2. Verfahren nach Anspruch 1, **dadurch gekennzeichnet, dass** beim Bildungsprozess (P2A) nacheinander ausgeführt wird:
a) der kollektive Oberflächenbehandlungsschritt (E4), der darin besteht, die Oberflächen des aktiven Stabs (5) zu behandeln; und
b) der Schritt der transversalen Schnitte (E5), der darin besteht, den auf diese Weise behandelten, aktiven Stab (5) derart zu schneiden, dass eine Vielzahl von aktiven Elementen (1) gebildet wird, die die erste und zweite Seite (S1, S2) umfassen, die um die vordefinierte Entfernung (e) voneinander beabstandet sind.

3. Verfahren nach Anspruch 1, **dadurch gekennzeichnet, dass** beim Bildungsprozess (P2B) nacheinander ausgeführt wird:
a) der Schritt der transversalen Schnitte (E8), der darin besteht, den aktiven Stab (5) derart zu schneiden, dass eine Vielzahl von aktiven Elementen (1) gebildet wird, die die erste und zweite Seite (S1, S2) umfassen, die um die vordefinierte Entfernung (e) voneinander beabstandet sind; und
b) der Schritt der kollektiven Oberflächenbehandlung (E9), wobei man durch einfaches Inkontaktbringen der ersten und zweiten Seite (S1, S2) mindestens einige der auf diese Weise gebildeten aktiven Elemente (1) derart zusammensetzt, dass man einen mindestens teilweise wiederhergestellten aktiven Stab erhält, und wobei man die Oberflächen des Letztgenannten behandelt.

4. Verfahren nach einem der Ansprüche 1 bis 3, **dadurch. gekennzeichnet, dass** beim Bildungsprozess (P2A, P2B) nach dem Schritt der transversalen Schnitte (E5, E8) ein Poliervorgang der geschnittenen Seiten, die der ersten und zweiten Seite (S1, S2) der aktiven Elemente (1) entsprechen, ausgeführt wird.

5. Verfahren nach einem der Ansprüche 1 bis 4, **dadurch gekennzeichnet, dass** beim Schritt der transversalen Schnitte (E5, E8) aufeinanderfolgende Schnitte mittels einer Diamantsäge durchgeführt werden.

6. Verfahren nach einem der Ansprüche 1 bis 4, **dadurch gekennzeichnet, dass** beim Schritt der transversalen Schnitte (E5, E8) gleichzeitig eine Vielzahl von Schnitten mittels einer Säge durchgeführt wird, die einen Kamm mit parallelen Bändern umfasst.

7. Verfahren nach einem der Ansprüche 1 bis 6, **dadurch gekennzeichnet, dass** beim Prozess der Vorbereitung (P1A) des aktiven Stabs (5) auf aufeinanderfolgende Weise Folgendes ausgeführt wird:
a) der Schritt des Ausschneidens (E1, E2), der darin besteht, die länglichen Blöcke (6, 7, 8) auf derartige Abmessungen zuzuschneiden, dass sie, wenn sie miteinander verbunden sind, den aktiven Stab (5) bilden; der einen Querschnitt aufweist, der identisch ist mit der genannten geometrischen Form, und der eine Länge (L) aufweist, die größer ist als mindestens das Doppelte der vordefinierten Entfernung (e) zwischen der ersten und der zweiten Seite (S1, S2) eines aktiven Elements (1); und
b) der Schritt des Verbindens (E3), der darin besteht, die länglichen Blöcke derart zu verbinden, dass diese den aktiven Stab (5) bilden.

8. Verfahren nach einem der Ansprüche 1 bis 6, **dadurch gekennzeichnet, dass** beim Prozess der Vorbereitung (P1B) des aktiven Stabs (5) auf aufeinanderfolgende Weise Folgendes ausgeführt wird:
a) der Schritt des Verbindens (E6), der darin besteht, die länglichen Blöcke (6, 7, 8) derart zu verbinden, dass diese eine aktive Einheit bilden; und
b) der Schritt des Ausschneidens (E7), der darin besteht, die aktive Einheit derart auszuschneiden, dass man den aktiven Stab erhält (5), der einen Querschnitt aufweist, der identisch ist mit der genannten geometrischen Form, und der eine Länge (L) aufweist, die größer ist als mindestens das Doppelte der vordefinierten Entfernung (e) zwischen der ersten und der zweiten Seite (S1, S2) eines aktiven Elements (1).

9. Verfahren nach einem der vorhergehenden Ansprüche, **dadurch gekennzeichnet, dass** beim Prozess der Vorbereitung (P1A, P1B) des aktiven Stabs (5) die Seiten der länglichen Blöcke (6, 7, 8) poliert werden, die sichtbar sind, wenn sich die länglichen Blöcke (6, 7, 8) in einer Position befinden, die der Verbindungsposition entspricht.

10. Verfahren nach einem der vorhergehenden Ansprüche, **dadurch gekennzeichnet, dass** beim Verbindungsschritt (E3, E6) die länglichen Blöcke (6, 7, 8) durch Schweißen miteinander verbunden werden.

11. Verfahren nach einem der vorhergehenden Ansprüche, **dadurch gekennzeichnet, dass** der aktive Stab (5) ausgehend von einem dotierten länglichen Block (6) und zwei nicht dotierten länglichen Blöcken (7, 8) geformt wird.

12. Verfahren nach Anspruch 11, **dadurch gekennzeichnet, dass**
- der dotierte längliche Block (6) die Form einer Platte aufweist, und dass
- die beiden nicht dotierten länglichen Blöcke (7, 8) identisch sind und
- zu beiden Seiten der Platte (6) befestigt sind.

## Claims

1. Method for fabricating active elements (1) for a laser source, each of the said active elements (1) comprising at least one doped part (2) comprising an absorbent doping capable of absorbing a pump beam in order to amplify laser radiation and at least one undoped part (3, 4), not comprising such an absorbent doping, each of the said active elements (1) having a first face (S1) and a second opposed face (S2) each of which has the same geometrical shape and which are separated one from the other by a predefined distance (e),
**characterized in that** the following is carried out in succession:
A) a process (P1A, P1B) of preparing an elongate active rod (5), which has a cross section identical to the said geometrical shape and a length (L) at least more than twice the size of the said predefined distance (e) between the first and second faces (S1, S2) of an active element (1), the said preparation process (P1A, P1B) comprising at least one cutting step (E1, E2, E7) and a step (E3, E6) of joining at least one doped elongate block (6) comprising the said absorbing doping and at least one undoped elongate block (7, 8) not comprising the said absorbent doping; and
B) a process (P2A, P2B) of forming a plurality of active elements (1) from the said active rod (5), the said formation process comprising at least one step (E5, E8) of transversely cutting along the said active rod (5) and a step (E4, E9) of collectively treating surfaces of the said active elements (1).

2. Method according to Claim 1,
**characterized in that**, during the said formation process (P2A), the following is carried out in succession:
a) the said step (E4) of collectively treating surfaces, consisting in treating the surfaces of the said active rod (5); and
b) the said transverse cutting step (E5) consisting in cutting the said active rod (5) treated in this way so as to form a plurality of active elements (1) comprising the said first and second faces (S1, S2) separated one from the other by the said predefined distance (e).

3. Method according to Claim 1,
**characterized in that**, during the said formation process (P2B), the following is carried out in succession:
a) the said transverse cutting step (E8) consisting in cutting the said active rod (5) so as to form a plurality of active elements (1) comprising the said first and second faces (S1, S2) separated one from the other by the said predefined distance (e); and
b) the said step (E9) of collectively treating surfaces, according to which at least some of the active elements (1) formed in this way are reassembled by simply bringing the first and second faces (S1, S2) into contact so as to obtain an at least partially reconstructed active rod and the surfaces thereof are treated.

4. Method according to any one of Claims 1 to 3,
**characterized in that**, during the said formation process (P2A, P2B), the cut faces corresponding to the said first and second faces (S1, S2) of the active elements (1) are polished, after the transverse cutting step (E5, E8).

5. Method according to any one of Claims 1 to 4,
**characterized in that** successive cuts are made by means of a diamond saw, at the transverse cutting step (E5, E8).

6. Method according to any one of Claims 1 to 4,
**characterized in that** a plurality of cuts are made simultaneously at the transverse cutting step (E5, E8) by means of a saw comprising a comb of parallel blades.

7. Method according to any one of Claims 1 to 6,
**characterized in that**, during the said process (P1A) of preparing the active rod (5), the following are carried out in succession:
a) the said cutting step (E1, E2), consisting in cutting the said elongate blocks (6, 7, 8) to sizes such that, when they are joined one to the other, they form the said active rod (5) having a cross section identical to the said geometric shape and a length (L) which is at least more than twice the said predefined distance (e) between the first and second faces (S1, S2) of an active element (1); and
b) the said joining step (E3) consisting in joining the said elongate blocks (6, 7, 8) so as to form the said active rod (5).

8. Method according to any one of Claims 1 to 6,
**characterized in that**, during the said process (P1B) of preparing the active rod (5), the following are carried out in succession:
a) the said joining step (E6) consisting in joining the said elongate blocks (6, 7, 8) so as to form an active unit; and
b) the said cutting step (E7) consisting in cutting the said active unit so as to obtain the said active rod (5) having a cross section identical to the said geometric shape and a length (L) which is at least more than twice the said predefined distance (e) between the first and second faces (S1, S2) of an active element (1).

9. Method according to any one of the preceding claims,
**characterized in that**, during the said process (P1A, P1B) of preparing the said active rod (5), the faces of the said elongate blocks (6, 7, 8), which are visible when the said elongate blocks (6, 7, 8) are in a position corresponding to the joining position, are polished.

10. Method according to any one of the preceding claims,
**characterized in that**, during the said joining step (E3, E6), the said elongate blocks (6, 7, 8) are joined one to the other by means of welding.

11. Method according to any one of the preceding claims,
**characterized in that** the said active rod (5) is formed from one doped elongate block (6) and from two undoped elongate blocks (7, 8).

12. Method according to Claim 11,
**characterized in that** the said doped elongate block (6) has the shape of a plate and **in that** the said two undoped elongate blocks (7, 8), are identical and are attached on either side of the said plate (6).
